# EUROPEAN PATENT APPLICATION

(11) **EP 4 675 898 A1**
(43) Date of publication of application: **07.01.2026**
(21) Application number: 23924884.2
(22) Date of filing: 25.08.2023
(51) Int. Cl.: H02K 9/19, H02K 9/193

(54) **ELECTRIC POWER ASSEMBLY AND VEHICLE**

(30) Priority: 28.02.2023 CN 202310224241
(71) Applicant: BYD Company Limited, Shenzhen, Guangdong 518118 (CN)
(72) Inventor: YANG, Shenglin, Shenzhen, Guangdong 518118 (CN); GAO, Yuan, Shenzhen, Guangdong 518118 (CN); CHEN, Yong, Shenzhen, Guangdong 518118 (CN); ZHANG, Jun, Shenzhen, Guangdong 518118 (CN); TANG, Lizhong, Shenzhen, Guangdong 518118 (CN)
(74) Representative: Mathys & Squire
(86) International application number: PCT/CN2023/115007
(87) International publication number: WO 2024/178927

(57) **Abstract**

A vehicle has an electric assembly. The electric assembly includes a motor, a reduction gearbox, an oil storage apparatus, an oil pumping apparatus, a cooler, and a cooling oil circuit. The cooling oil circuit includes a cooler front oil circuit and a cooler rear oil circuit. An outlet of the oil pumping apparatus is connected to an inlet of the cooler. An outlet of the cooler is connected to an inlet of the cooler rear oil circuit. The cooler rear oil circuit includes a main oil circuit, a rotor cooling oil circuit, and a stator cooling oil circuit. An inlet of the rotor cooling oil circuit and an inlet of the stator cooling oil circuit are connected to the main oil circuit. The stator cooling oil circuit is configured to at least cool a stator assembly of the motor. The rotor cooling oil circuit is configured to at least cool a rotor assembly of the motor. An inlet of the cooler front oil circuit is connected between the inlet of the cooler and the outlet of the oil pumping apparatus. The cooler front oil circuit is configured to cool at least a part of the reduction gearbox.

## Description

This application claims priority to Chinese Patent Application No. 202310224241.3, filed on February 28, 2023 and entitled "ELECTRIC ASSEMBLY AND VEHICLE", which is incorporated herein by reference in its entirety.

### TECHNICAL FIELD

This application pertains to the field of motor cooling technologies, and in particular, to an electric assembly and a vehicle.

### BACKGROUND

An electric assembly in a related art includes a motor, a reduction gearbox, an oil sump, and a cooling system. The cooling system includes at least one heat exchanger and at least two oil pumps. The at least two oil pumps are configured to deliver, to the heat exchanger, cooling oil drawn from the oil sump. The heat exchanger is configured to cool the cooling oil drawn by the at least two oil pumps. An oil outlet of the heat exchanger is connected to an oil circuit in the motor and an oil circuit in the reduction gearbox, so that a part of the cooling oil cools the motor through the oil circuit in the motor, and another part of the cooling oil cools the reduction gearbox through the oil circuit in the reduction gearbox.

However, in the electric assembly in the related art, the cooling oil drawn by the oil pumps needs to pass through the heat exchanger before separately cooling the motor and the reduction gearbox, increasing the cooling load of the heat exchanger and increasing energy consumption of the vehicle.

### SUMMARY

A technical problem to be resolved in this application is the problem that, for an electric assembly in a related technology, cooling oil drawn by oil pumps needs to pass through a heat exchanger before separately cooling a motor and a reduction gearbox, increasing a cooling load of the heat exchanger. Therefore, an electric assembly and a vehicle are provided.

To resolve the foregoing technical problem, according to an aspect, an embodiment of this application provides an electric assembly, including a motor, a reduction gearbox, an oil storage apparatus, an oil pumping apparatus, a cooler, and a cooling oil circuit. The cooling oil circuit includes a cooler front oil circuit and a cooler rear oil circuit. A housing of the motor and a housing of the reduction gearbox are combined to form an assembly housing. The cooler front oil circuit and the cooler rear oil circuit are disposed on the assembly housing.

An inlet of the oil pumping apparatus is connected to the oil storage apparatus to draw cooling oil from the oil storage apparatus. An outlet of the oil pumping apparatus is connected to an inlet of the cooler. An outlet of the cooler is connected to an inlet of the cooler rear oil circuit. The cooler rear oil circuit includes a main oil circuit, a rotor cooling oil circuit, and a stator cooling oil circuit. An inlet of the rotor cooling oil circuit and an inlet of the stator cooling oil circuit are connected to the main oil circuit. The stator cooling oil circuit is configured to at least cool a stator assembly of the motor. The rotor cooling oil circuit is configured to at least cool a rotor assembly of the motor.

An inlet of the cooler front oil circuit is connected between the inlet of the cooler and the outlet of the oil pumping apparatus, and the cooler front oil circuit is configured to cool at least a part of the reduction gearbox.

Optionally, the electric assembly further includes an oil outlet pipeline and a cooler connection oil circuit, and the oil outlet pipeline is connected to the inlet of the cooler by using the cooler connection oil circuit.

Optionally, the reduction gearbox includes a counter shaft, an output shaft, a primary reduction gear set, and a secondary reduction gear set. The primary reduction gear set includes a primary reduction driving gear and a primary reduction driven gear that are engaged with each other. The primary reduction driving gear is fastened to a rotating shaft of the motor. The primary reduction driven gear is fastened to the counter shaft. The secondary reduction gear set includes a secondary reduction driving gear and a secondary reduction driven gear that are engaged with each other. The secondary reduction driving gear is fastened to the counter shaft. The secondary reduction driven gear is fastened to the output shaft.

Two ends of the counter shaft are rotatably supported on the housing of the reduction gearbox by using a first bearing and a second bearing respectively. Two ends of the output shaft are rotatably supported on the housing of the reduction gearbox by using a third bearing and a fourth bearing respectively. The first bearing and the third bearing are located on a side of the reduction gearbox that is far away from the motor. The second bearing and the fourth bearing are located on a side of the reduction gearbox that is close to the motor.

Optionally, the cooler front oil circuit includes a first bearing cooling oil circuit and a third bearing cooling oil circuit. An inlet of the first bearing cooling oil circuit and an inlet of the third bearing cooling oil circuit are connected to the oil outlet pipeline.

An outlet of the first bearing cooling oil circuit faces the first bearing, so as to allow the cooling oil to be splashed onto the first bearing to cool and lubricate the first bearing. An outlet of the third bearing cooling oil circuit faces the third bearing, so as to allow the cooling oil to be splashed onto the third bearing to cool and lubricate the third bearing.

Optionally, the inlet of the first bearing cooling oil circuit is a first oil hole, the inlet of the third bearing cooling oil circuit is a second oil hole, and a difference between hole sizes of the first oil hole and the second oil hole is not greater than 20%.

Optionally, the inlet of the first bearing cooling oil circuit is the first oil hole, the inlet of the third bearing cooling oil circuit is the second oil hole, an inlet of the cooler connection oil circuit is a main oil hole, and a hole size of the main oil hole is at least five times greater a hole size of a larger of the first oil hole and the second oil hole.

Optionally, the rotating shaft of the motor is rotatably supported on the housing of the motor by using a plurality of motor bearings. The rotating shaft of the motor is a hollow shaft. The rotor cooling oil circuit extends along an inner hole of the hollow shaft. A plurality of bearing oil holes are disposed on the rotating shaft of the motor. Each of the bearing oil holes faces a corresponding motor bearing, so as to allow the cooling oil to be splashed onto the motor bearing to cool and lubricate the motor bearing.

Optionally, the plurality of motor bearings include a fifth bearing, a sixth bearing, a seventh bearing, and an eighth bearing that are sequentially arranged close to the reduction gearbox. The primary reduction driving gear is located between the seventh bearing and the eighth bearing in an axial direction. The stator assembly of the motor is located between the fifth bearing and the sixth bearing.

The plurality of bearing oil holes include a fifth oil hole, a sixth oil hole, a seventh oil hole, and an eighth oil hole. The fifth oil hole faces the fifth bearing, so as to allow the cooling oil to be splashed onto the fifth bearing to cool and lubricate the fifth bearing. The sixth oil hole faces the sixth bearing, so as to allow the cooling oil to be splashed onto the sixth bearing to cool and lubricate the sixth bearing. The seventh oil hole faces the seventh bearing, so as to allow the cooling oil to be splashed onto the seventh bearing to cool and lubricate the seventh bearing. The eighth oil hole faces the eighth bearing, so as to allow the cooling oil to be splashed onto the eighth bearing to cool and lubricate the eighth bearing.

Optionally, a difference between hole sizes of a largest one and a smallest one of the fifth oil hole, the sixth oil hole, the seventh oil hole, and the eighth oil hole is not greater than 50%.

Optionally, a ninth oil hole and a tenth oil hole are disposed on the rotating shaft of the motor. The ninth oil hole faces one end of a stator winding of the motor, to cool the end of the stator winding in an oil slinging manner. The tenth oil hole faces the other end of the stator winding of the motor, to cool the other end of the stator winding in an oil slinging manner.

Optionally, a difference between hole sizes of the ninth oil hole and the tenth oil hole is not greater than 20%.

Optionally, a hole size of a larger one of the ninth oil hole and the tenth oil hole is greater than or equal to three times a hole size of a largest one of the fifth oil hole, the sixth oil hole, the seventh oil hole, and the eighth oil hole.

Optionally, the stator cooling oil circuit includes a stator spraying oil circuit. The stator spraying oil circuit is arranged on a radial outer side of the stator assembly of the motor. A plurality of spraying ports that face the stator assembly of the motor are disposed on the stator spraying oil circuit in a length direction of the stator spraying oil circuit, to cool the stator assembly of the motor.

Optionally, the stator cooling oil circuit further includes a reduction gearbox bearing cooling oil circuit and a reduction gearbox primary gear cooling oil circuit. An inlet of the reduction gearbox bearing cooling oil circuit and an inlet of the reduction gearbox primary gear cooling oil circuit are connected between the stator spraying oil circuit and the main oil circuit.

An outlet of the reduction gearbox primary gear cooling oil circuit faces an engagement location between the primary reduction driving gear and the primary reduction driven gear to cool and lubricate the primary reduction gear set. A fourteenth oil hole and a fifteenth oil hole are disposed on the reduction gearbox bearing cooling oil circuit. The fourteenth oil hole faces the second bearing, so as to allow the cooling oil to be splashed onto the second bearing to cool and lubricate the second bearing. The fifteenth oil hole faces the fourth bearing, so as to allow the cooling oil to be splashed onto the fourth bearing to cool and lubricate the fourth bearing.

Optionally, the inlet of the reduction gearbox primary gear cooling oil circuit is a twelfth oil hole, and the inlet of the reduction gearbox bearing cooling oil circuit is a thirteenth oil hole.

A difference between hole sizes of the twelfth oil hole and the thirteenth oil hole is not greater than 50%.

Optionally, an inlet of the stator spraying oil circuit is an eleventh oil hole, the inlet of the reduction gearbox primary gear cooling oil circuit is the twelfth oil hole, the inlet of the reduction gearbox bearing cooling oil circuit is the thirteenth oil hole, and a hole size of the eleventh oil hole is at least five times greater a hole size of a larger of the twelfth oil hole and the thirteenth oil hole.

Optionally, the primary reduction gear set and/or the secondary reduction gear set are/is immersed in the cooling oil.

Optionally, the inlet of the reduction gearbox primary gear cooling oil circuit is the twelfth oil hole, and the inlet of the reduction gearbox bearing cooling oil circuit is the thirteenth oil hole.

The primary reduction gear set is immersed in the cooling oil, and a difference between hole sizes of the twelfth oil hole and the thirteenth oil hole is not greater than 50%, or the primary reduction gear set is not immersed in the cooling oil, and a hole size of the twelfth oil hole is more than twice a hole size of the thirteenth oil hole.

Optionally, a difference between hole sizes of the fourteenth oil hole and the fifteenth oil hole is not greater than 30%.

Optionally, the stator cooling oil circuit further includes a reduction gearbox secondary gear cooling oil circuit, and an inlet of the reduction gearbox secondary gear cooling oil circuit is connected between the stator spraying oil circuit and the main oil circuit.

An outlet of the reduction gearbox secondary gear cooling oil circuit faces an engagement location between the secondary reduction driving gear and the secondary reduction driven gear to cool and lubricate the secondary reduction gear set.

Optionally, the inlet of the reduction gearbox primary gear cooling oil circuit is the twelfth oil hole, the inlet of the reduction gearbox bearing cooling oil circuit is the thirteenth oil hole, and the inlet of the reduction gearbox secondary gear cooling oil circuit is a sixteenth oil hole.

The secondary reduction gear set is not immersed in the cooling oil, and a hole size of the sixteenth oil hole is greater than a hole size of the twelfth oil hole, or the secondary reduction gear set is immersed in the cooling oil, and a hole size of the sixteenth oil hole is less than hole sizes of the twelfth oil hole and the thirteenth oil hole.

Optionally, the oil storage apparatus is an oil sump. The oil pumping apparatus includes a first oil pump and a second oil pump that are connected in parallel. An inlet of the first oil pump and an inlet of the second oil pump are connected to the oil sump by using a pipeline. An outlet of the first oil pump and an outlet of the second oil pump are connected to the inlet of the cooler by using the oil outlet pipeline.

A first one-way valve is disposed at the outlet of the first oil pump, so that cooling oil flowing out of the first oil pump can only flow from the first oil pump to the cooler and the cooler front oil circuit.

A second one-way valve is disposed at the outlet of the second oil pump, so that cooling oil flowing out of the second oil pump can only flow from the second oil pump to the cooler and the cooler front oil circuit.

Optionally, there are two motors, two reduction gearboxes, and two cooling oil circuits. One of the cooling oil circuits is configured to cool one of the motors and one of the reduction gearboxes. The other cooling oil circuit is configured to cool the other motor and the other reduction gearbox.

Main oil circuits of the two cooling oil circuits are separately disposed or combined.

Optionally, the two motors are coaxially disposed, and the two reduction gearboxes are disposed side by side between the two motors in a left-right direction of a vehicle.

The two cooling oil circuits are symmetrically disposed in the left-right direction of the vehicle.

According to the electric assembly in this embodiment of this application, the cooling oil circuit includes the cooler front oil circuit and the cooler rear oil circuit. The outlet of the cooler is connected to the inlet of the cooler rear oil circuit, and the inlet of the cooler front oil circuit is connected between the inlet of the cooler and the outlet of the oil pumping apparatus. In this way, the cooler rear oil circuit configured to cool the motor is behind the cooler, so that cooling oil of the cooler rear oil circuit is cooled by the cooler. In addition, the inlet of the cooler front oil circuit configured to cool the reduction gearbox is in front of the cooler, so that cooling oil of the cooler front oil circuit is not cooled by the cooler. In this way, while cooling requirements of the motor and the reduction gearbox are met, a cooling load of the cooler can be reduced, and energy consumption of the vehicle can be reduced.

According to another aspect, an embodiment of this application further provides a vehicle, including a front axle and a rear axle. The foregoing electric assembly is disposed on at least one of the front axle and the rear axle.

### BRIEF DESCRIPTION OF DRAWINGS

FIG. 1 is a schematic diagram of an electric assembly according to an embodiment of this application; and
FIG. 2 is a sectional view of an electric assembly according to an embodiment of this application.

Reference numerals in the specification are as follows:
1. motor; 11. stator assembly; 111. stator core; 112. stator winding; 12. rotor assembly; 121. rotating shaft; 122. rotor core;
2. reduction gearbox; 21. counter shaft; 22. output shaft; 23. primary reduction gear set; 231. primary reduction driving gear; 232. primary reduction driven gear; 24. secondary reduction gear set; 241. secondary reduction driving gear; 242. secondary reduction driven gear;
3. oil storage apparatus;
4. oil pumping apparatus; 41. first oil pump; 42. second oil pump;
5. cooler;
6. cooling oil circuit; 61. cooler front oil circuit; 611. first bearing cooling oil circuit; 612. third bearing cooling oil circuit; 62. cooler rear oil circuit; 621. main oil circuit; 622. rotor cooling oil circuit; 623. stator cooling oil circuit; 6231. stator spraying oil circuit; 6233. reduction gearbox bearing cooling oil circuit; 6234. reduction gearbox primary gear cooling oil circuit;
7. oil outlet pipeline;
8. cooler connection oil circuit;
91. first bearing; 92. second bearing; 93. third bearing; 94. fourth bearing; 95. fifth bearing; 96. sixth bearing; 97. seventh bearing; 98. eighth bearing;
10. assembly housing;
A. main oil hole; a1. first oil hole; a2. second oil hole; a3. third oil hole; a4. fourth oil hole; a5. fifth oil hole; a6. sixth oil hole; a7. seventh oil hole; a8. eighth oil hole; a9. ninth oil hole; a10. tenth oil hole; a11. eleventh oil hole; a12. twelfth oil hole; a13. thirteenth oil hole; a14. fourteenth oil hole; and a15. fifteenth oil hole.

### DESCRIPTION OF EMBODIMENTS

To make the technical problems to be resolved, technical solutions, and beneficial effects in this application clearer, the following further describes this application in detail with reference to the accompanying drawings and embodiments. It will be understood that the specific embodiments described herein are merely intended to explain this application, and are not intended to limit this application.

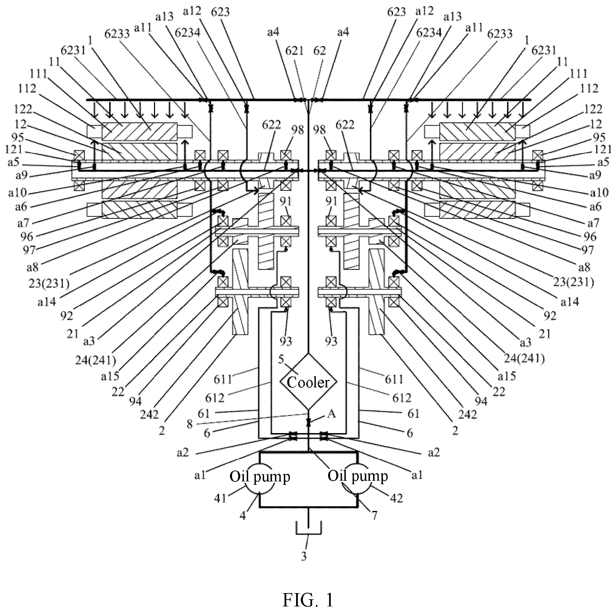

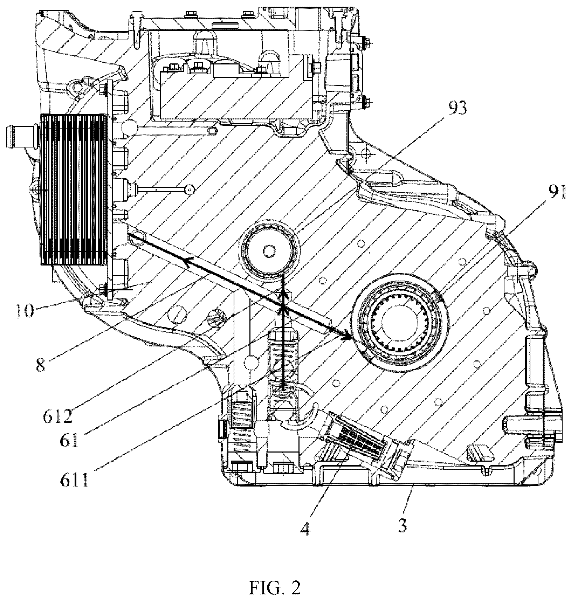

As shown in FIG. 1 and FIG. 2, an embodiment of this application provides an electric assembly, including a motor 1, a reduction gearbox 2, an oil storage apparatus 3, an oil pumping apparatus 4, a cooler 5, and a cooling oil circuit 6. The cooling oil circuit 6 includes a cooler front oil circuit 61 and a cooler rear oil circuit 62. A housing of the motor 1 and a housing of the reduction gearbox 2 are combined to form an assembly housing 10. The cooler front oil circuit 61 and the cooler rear oil circuit 62 are disposed on the assembly housing 10. An inlet of the oil pumping apparatus 4 is connected to the oil storage apparatus 3 to draw cooling oil from the oil storage apparatus 3. An outlet of the oil pumping apparatus 4 is connected to an inlet of the cooler 5. An outlet of the cooler 5 is connected to an inlet of the cooler rear oil circuit 62. The cooler rear oil circuit 62 includes a main oil circuit 621, a rotor cooling oil circuit 622, and a stator cooling oil circuit 623. An inlet of the rotor cooling oil circuit 622 and an inlet of the stator cooling oil circuit 623 are connected to the main oil circuit 621. The stator cooling oil circuit 623 is configured to at least cool a stator assembly 11 of the motor 1. The rotor cooling oil circuit 622 is configured to at least cool a rotor assembly 12 of the motor 1. An inlet of the cooler front oil circuit 621 is connected between the inlet of the cooler 5 and the outlet of the oil pumping apparatus 4, and the cooler front oil circuit 61 is configured to cool at least a part of the reduction gearbox 2.

Referring to FIG. 1, the stator assembly 11 of the motor 1 includes a stator core 111 and a stator winding 112 protruding from two axial ends of the stator core 111. That is, the stator cooling oil circuit 623 is configured to at least cool the stator core 111 and the stator winding 112. The rotor assembly 12 of the motor 1 includes a rotating shaft 121 and a rotor core 122 fastened to a periphery of the rotating shaft 121. The rotor core 122 is rotatably disposed inside the stator core 111.

In an embodiment, the electric assembly further includes an oil outlet pipeline 7 and a cooler connection oil circuit 8. The oil outlet pipeline 7 is connected to the inlet of the cooler 5 by using the cooler connection oil circuit 8. An inlet of the cooler connection oil circuit 8 is a main oil hole A. The inlet of the cooler front oil circuit 61 is connected to the oil outlet pipeline 7.

In an embodiment, the reduction gearbox 2 is a two-speed parallel-shaft gear reducer. The reduction gearbox 2 includes a counter shaft 21, an output shaft 22, a primary reduction gear set 23, and a secondary reduction gear set 24. The primary reduction gear set 23 includes a primary reduction driving gear 231 and a primary reduction driven gear 232 that are engaged with each other. The primary reduction driving gear 231 is fastened to the rotating shaft 121 of the motor 1. The primary reduction driven gear 232 is fastened to the counter shaft 21. The secondary reduction gear set 24 includes a secondary reduction driving gear 241 and a secondary reduction driven gear 242 that are engaged with each other. The secondary reduction driving gear 241 is fastened to the counter shaft 21. The secondary reduction driven gear 242 is fastened to the output shaft 22. Two ends of the counter shaft 21 are rotatably supported on the housing of the reduction gearbox 2 by using a first bearing 91 and a second bearing 92 respectively. Two ends of the output shaft 22 are rotatably supported on the housing of the reduction gearbox 2 by using a third bearing 93 and a fourth bearing 94 respectively. The first bearing 91 and the third bearing 93 are located on a side of the reduction gearbox 2 that is far away from the motor 1. The second bearing 92 and the fourth bearing 94 are located on a side of the reduction gearbox 2 that is close to the motor 1.

However, in another embodiment, the reduction gearbox may alternatively be a single-speed gear reducer or a three-or-more-speed parallel-shaft gear reducer.

However, in another embodiment, the reduction gearbox may alternatively be a planetary gear reducer.

In an embodiment, the cooler front oil circuit 61 includes a first bearing cooling oil circuit 611 and a third bearing cooling oil circuit 612. An inlet of the first bearing cooling oil circuit 611 and an inlet of the third bearing cooling oil circuit 613 are connected to the oil outlet pipeline 7. The inlet of the first bearing cooling oil circuit 611 is a first oil hole a1, and the inlet of the third bearing cooling oil circuit 612 is a second oil hole a2. An outlet of the first bearing cooling oil circuit 611 faces the first bearing 91, so as to allow the cooling oil to be splashed onto the first bearing 91 to cool and lubricate the first bearing 91. An outlet of the third bearing cooling oil circuit 612 faces the third bearing 613, so as to allow the cooling oil to be splashed onto the third bearing 613 to cool and lubricate the third bearing 613. In this way, cooling oil of the cooler front oil circuit 61 does not pass through the cooler 5, and is used to cool and lubricate the two bearings that are on the reduction gearbox 2 and that are far away from the motor 1, thereby simplifying oil circuit design and reducing a cooling load of the cooler 5.

In an embodiment, the inlet of the rotor cooling oil circuit 622 is a third oil hole a3, and the inlet of the stator cooling oil circuit 623 is a fourth oil hole a4.

In an embodiment, the rotating shaft 121 of the motor 1 is rotatably supported on the housing of the motor 1 by using a plurality of motor bearings. The rotating shaft 121 of the motor 1 is a hollow shaft. The rotor cooling oil circuit 622 extends along an inner hole of the hollow shaft 121. A plurality of bearing oil holes are disposed on the rotating shaft 121 of the motor 1. Each of the bearing oil holes faces a corresponding motor bearing, so as to allow the cooling oil to be splashed onto the motor bearing to cool and lubricate the motor bearing.

In an embodiment, the plurality of motor bearings include a fifth bearing 95, a sixth bearing 96, a seventh bearing 97, and an eighth bearing 98 that are sequentially arranged close to the reduction gearbox 2. The primary reduction driving gear 231 is located between the seventh bearing 97 and the eighth bearing 98 in an axial direction. The stator assembly 11 of the motor 1 is located between the fifth bearing 95 and the sixth bearing 96. The plurality of bearing oil holes include a fifth oil hole a5, a sixth oil hole a6, a seventh oil hole a7, and an eighth oil hole a8. The fifth oil hole a5 faces the fifth bearing 95, so as to allow the cooling oil to be splashed onto the fifth bearing 95 to cool and lubricate the fifth bearing 95. The sixth oil hole faces the sixth bearing 96, so as to allow the cooling oil to be splashed onto the sixth bearing 96 to cool and lubricate the sixth bearing 96. The seventh oil hole a7 faces the seventh bearing 97, so as to allow the cooling oil to be splashed onto the seventh bearing 97 to cool and lubricate the seventh bearing 97. The eighth oil hole a8 faces the eighth bearing 98, so as to allow the cooling oil to be splashed onto the eighth bearing 98 to cool and lubricate the eighth bearing 98.

In an embodiment, a ninth oil hole a9 and a tenth oil hole a10 are disposed on the rotating shaft 121 of the motor 1. The ninth oil hole a9 faces one end of the stator winding 112 of the motor 1, to cool the end (one end far away from the reduction gearbox 2) of the stator winding 112 in an oil slinging manner. The tenth oil hole a10 faces the other end of the stator winding 112 of the motor 1, to cool the other end (one end close to the reduction gearbox 2) of the stator winding 112 in the oil slinging manner.

In an embodiment, the stator cooling oil circuit 623 includes a stator spraying oil circuit 6231. An inlet of the stator spraying oil circuit 6231 is an eleventh oil hole a11. The stator spraying oil circuit 6231 is arranged on a radial outer side of the stator assembly 11 of the motor 1. A plurality of spraying ports that face the stator assembly 11 of the motor 1 are disposed on the stator spraying oil circuit 6231 in a length direction of the stator spraying oil circuit 6231, to cool the stator core 1111 and the stator winding 112 of the stator assembly 11 of the motor 1. In this way, the motor 1 uses a cooling manner combining rotor oil slinging with stator oil spraying. Lubricating oil of the cooling oil circuit passes through the rotor cooling oil circuit 622 in the rotating shaft 121 of the motor 1 and is slung to an end part of the stator winding 112 through highspeed rotation of the rotor assembly 12, and the lubricating oil of the cooling oil circuit further passes through the stator spraying oil circuit 6231 (an oil spraying pipe) and is sprayed to a surface of the stator core 112 and an end part of the stator winding 112. In this way, the motor 1 can be sufficiently cooled, thereby improving heat dissipation performance and power density of the motor 1.

In an embodiment, there are a plurality of stator spraying oil circuits 6231, and the plurality of stator spraying oil circuits 6231 are arranged in a circumferential direction of the stator assembly 11 of the motor 1.

In an embodiment, the stator cooling oil circuit 623 further includes a reduction gearbox bearing cooling oil circuit 6233 and a reduction gearbox primary gear cooling oil circuit 6234. An inlet of the reduction gearbox bearing cooling oil circuit 6233 and an inlet of the reduction gearbox primary gear cooling oil circuit 6234 are connected between the stator spraying oil circuit 6231 and the main oil circuit 621. The inlet of the reduction gearbox primary gear cooling oil circuit 6234 is a twelfth oil hole a12. The inlet of the reduction gearbox bearing cooling oil circuit 6233 is a thirteenth oil hole a13. An outlet of the reduction gearbox primary gear cooling oil circuit 6234 faces an engagement location between the primary reduction driving gear 231 and the primary reduction driven gear 232 to cool and lubricate the primary reduction gear set 23. A fourteenth oil hole a14 and a fifteenth oil hole a15 are disposed on the reduction gearbox bearing cooling oil circuit 6233. The fourteenth oil hole a14 faces the second bearing 92, so as to allow the cooling oil to be splashed onto the second bearing 92 to cool and lubricate the second bearing 92. The fifteenth oil hole a15 faces the fourth bearing 94, so as to allow the cooling oil to be splashed onto the fourth bearing 94 to cool and lubricate the fourth bearing 94.

In this way, each bearing of the electric assembly corresponds to a separate cooling oil circuit, that is, all bearings of the electric assembly use an active cooling and lubrication manner, which can improve durability and reliability of the bearings compared with splash cooling and lubrication (passive cooling and lubrication) for bearings in a conventional manner.

In an embodiment, the secondary reduction gear set 24 is immersed in the cooling oil, and the primary reduction gear set 23 is not immersed in the cooling oil.

However, in another embodiment, the secondary reduction gear set 24 may not be immersed in the cooling oil, and the primary reduction gear set 23 is immersed in the cooling oil.

However, in another embodiment, both the primary reduction gear set 23 and the secondary reduction gear set 24 may be immersed in the cooling oil.

However, in another embodiment, neither the primary reduction gear set 23 nor the secondary reduction gear set 24 is immersed in the cooling oil.

In an embodiment in which the secondary reduction gear set 24 is not immersed in the cooling oil, to resolve a problem of a poor oil slinging effect during a hill-climbing condition with a low speed and a high torque, the stator cooling oil circuit 623 further includes a reduction gearbox secondary gear cooling oil circuit. An inlet of the reduction gearbox secondary gear cooling oil circuit is connected between the stator spraying oil circuit 6231 and the main oil circuit 621. The inlet of the reduction gearbox secondary gear cooling oil circuit is a sixteenth oil hole (damping hole). An outlet of the reduction gearbox secondary gear cooling oil circuit faces an engagement location between the secondary reduction driving gear 241 and the secondary reduction driven gear 242, to cool and lubricate the secondary reduction gear set 24.

A hole size of each oil hole corresponds to a flow rate of cooling oil that can pass through the oil hole. For an element with high cooling and lubrication requirements, a hole size of an oil hole corresponding to an oil circuit used in the element is correspondingly larger. Through repeated reasoning and testing conducted by the inventors, preferable relationships between hole sizes of the oil holes are as follows.
(1) A difference between hole sizes of the first oil hole a1 and the second oil hole a2 is not greater than 20%. "A difference between hole sizes is not greater than 20%" means that a difference between a hole size of a larger one in two oil holes and a hole size of a smaller one in the two oil holes is taken as a numerator, the hole size of the smaller one in the two oil holes is taken as a denominator, and an obtained ratio is not greater than 20%. "A difference between hole sizes is not greater than 50%" and "a difference between hole sizes is not greater than 30%" below have the same definitions.
(2) A hole size of the main oil hole A is at least five times a hole size of a larger one of the first oil hole a1 and the second oil hole a2.
(3) A difference between hole sizes of a largest one and a smallest one in the fifth oil hole a5, the sixth oil hole a6, the seventh oil hole a7, and the eighth oil hole a8 is not greater than 50%.
(4) A difference between hole sizes of the ninth oil hole a9 and the tenth oil hole a10 is not greater than 20%.
(5) A hole size of a larger one of the ninth oil hole a9 and the tenth oil hole a10 is greater than or equal to three times a hole size of a largest one of the fifth oil hole a5, the sixth oil hole a6, the seventh oil hole a7, and the eighth oil hole a8.
(6) A difference between hole sizes of the twelfth oil hole a12 and the thirteenth oil hole a13 is not greater than 50%.
(7) A hole size of the eleventh oil hole a11 is at least five times a hole size of a larger one of the twelfth oil hole a12 and the thirteenth oil hole a13.
(8) A difference between hole sizes of the fourteenth oil hole a14 and the fifteenth oil hole a15 is not greater than 30%.
(9) In an embodiment in which the primary reduction gear set 23 is immersed in the cooling oil, a lubrication requirement is low. Then, the difference between the hole sizes of the twelfth oil hole a12 and the thirteenth oil hole a13 is not greater than 50%. In an embodiment in which the primary reduction gear set 23 is not immersed in the cooling oil, a lubrication requirement is high. Then, the hole size of the twelfth oil hole a12 is more than twice the hole size of the thirteenth oil hole a13.
(10) In an embodiment in which the secondary reduction gear set 24 is not immersed in the cooling oil, a hole size of the sixteenth oil hole is greater than the hole size of the twelfth oil hole a12. In an embodiment in which the secondary reduction gear set 24 is immersed in the cooling oil, the hole size of the sixteenth oil hole is less than the hole sizes of the twelfth oil hole a12 and the thirteenth oil hole a13.

Referring to FIG. 1, in an embodiment, the oil storage apparatus 3 is an oil sump. The oil pumping apparatus 4 includes a first oil pump 41 and a second oil pump 42 that are connected in parallel. An inlet of the first oil pump 41 and an inlet of the second oil pump 42 are connected to the oil sump by using a pipeline. An outlet of the first oil pump 41 and an outlet of the second oil pump 42 are connected to the inlet of the cooler 5 by using the oil outlet pipeline 7.

In an embodiment, a first one-way valve is disposed at the outlet of the first oil pump 41, so that cooling oil flowing out of the first oil pump 41 can only flow from the first oil pump 41 to the cooler 5 and the cooler front oil circuit 61; and a second one-way valve is disposed at the outlet of the second oil pump 42, so that cooling oil flowing out of the second oil pump 42 can only flow from the second oil pump 42 to the cooler 5 and the cooler front oil circuit 61. The first one-way valve and the second one-way valve are disposed so that the cooling oil flowing out of the first oil pump 41 does not flow back to the first oil pump 41, the cooling oil flowing out of the second oil pump 42 does not flow back to the second oil pump 42, and there is no cross-flow between the first oil pump 41 and the second oil pump 42. In a redundant design of the two oil pumps, when one of the oil pumps fails, the other oil pump can still pump oil to the electric assembly, ensuring that the electric assembly works normally when a load is light, and improving reliability of the electric assembly. For example, when the first oil pump 41 fails, the second oil pump 42 may still pump oil to the electric assembly, and the first one-way valve can prevent the cooling oil flowing out of the second oil pump 42 from entering the first oil pump 41. Similarly, when the second oil pump 42 fails, the first oil pump 41 may still pump oil to the electric assembly, and the second one-way valve can prevent the cooling oil flowing out of the first oil pump 41 from entering the second oil pump 42.

Referring to FIG. 1, in an embodiment, there are two motors 1 (one on the left and one on the right), two reduction gearboxes 2, and two cooling oil circuits 6. One of the cooling oil circuits 6 is configured to cool one of the motors 1 and one of the reduction gearboxes 2. The other cooling oil circuit 6 is configured to cool the other motor 1 and the other reduction gearbox 2. Main oil circuits 621 of the two cooling oil circuits 6 are combined to simplify a structure of the cooling oil circuit.

However, in another embodiment, the main oil circuits 621 of the two cooling oil circuits 6 may alternatively be separately disposed.

In an embodiment, the two motors 1 are coaxially disposed, and the two reduction gearboxes 2 are disposed side by side between the two motors 1 in a left-right direction of a vehicle. In this way, the electric assembly having the two motors 1 and the two reduction gearboxes 2 forms a wheel-side motor assembly. The two motors 1 are respectively configured to drive a left wheel and a right wheel. To be specific, in FIG. 1, the output shaft 22 of the reduction gearbox 2 on a left side is connected to one end of a left half shaft, and the other end of the left half shaft is connected to a left wheel. In FIG. 1, the output shaft 22 of the reduction gearbox 2 on a right side is connected to one end of a right half shaft, and the other end of the right half shaft is connected to a right wheel.

Preferably, the two cooling oil circuits 6 are symmetrically disposed in the left-right direction of the vehicle, to ensure consistency of cooling and lubrication of a left-side structure (the motor 1 on the left side and the reduction gearbox 2 on the left side) and a right-side structure (the motor 1 on the right side and the reduction gearbox 2 on the right side) of the electric assembly.

According to the electric assembly in this embodiment of this application, the cooler rear oil circuit 62 configured to cool the motor 1 is behind the cooler 5, so that cooling oil of the cooler rear oil circuit 62 is cooled by the cooler 5, and the inlet of the cooler front oil circuit 61 configured to cool the reduction gearbox 2 is in front of the cooler 5, so that cooling oil of the cooler front oil circuit 61 is not cooled by the cooler 5. In this way, while cooling requirements of the motor 1 and the reduction gearbox 2 are met, a cooling load of the cooler 5 can be reduced, and energy consumption of the vehicle can be reduced.

In addition, an embodiment of this application further provides a vehicle, including a front axle and a rear axle. The electric assembly in the foregoing embodiment is disposed on at least one of the front axle and the rear axle.

If the electric assembly in the foregoing embodiment is disposed only on the front axle, the vehicle is front-wheel-driven.

If the electric assembly in the foregoing embodiment is disposed only on the rear axle, the vehicle is rear-wheel-driven.

If the electric assembly in the foregoing embodiment is disposed on both the front axle and the rear axle, the vehicle is four-wheel-driven.

The foregoing are merely example embodiments of this application, and are not intended to limit this application. Any modification, equivalent replacement, improvement, and the like made within the spirit and principles of this application shall fall within the protection scope of this application.

## Claims

1. An electric assembly, comprising a motor (1), a reduction gearbox (2), an oil storage apparatus (3), an oil pumping apparatus (4), a cooler (5), and a cooling oil circuit (6), wherein the cooling oil circuit (6) comprises a cooler front oil circuit (61) and a cooler rear oil circuit (62), a housing of the motor (1) and a housing of the reduction gearbox (2) are combined to form an assembly housing (10), and the cooler front oil circuit (61) and the cooler rear oil circuit (62) are disposed on the assembly housing (10);
an inlet of the oil pumping apparatus (4) is connected to the oil storage apparatus (3) to draw cooling oil from the oil storage apparatus (3), an outlet of the oil pumping apparatus (4) is connected to an inlet of the cooler (5), an outlet of the cooler (5) is connected to an inlet of the cooler rear oil circuit (62), the cooler rear oil circuit (62) comprises a main oil circuit (621), a rotor cooling oil circuit (622), and a stator cooling oil circuit (623), an inlet of the rotor cooling oil circuit (622) and an inlet of the stator cooling oil circuit (623) are connected to the main oil circuit (621), the stator cooling oil circuit (623) is configured to at least cool a stator assembly (11) of the motor (1), and the rotor cooling oil circuit (623) is configured to at least cool a rotor assembly (12) of the motor (1); and
an inlet of the cooler front oil circuit (61) is connected between the inlet of the cooler (5) and the outlet of the oil pumping apparatus (4), and the cooler front oil circuit (61) is configured to cool at least a part of the reduction gearbox (2).

2. The electric assembly according to claim 1, wherein the electric assembly further comprises an oil outlet pipeline (7) and a cooler connection oil circuit (8), and the oil outlet pipeline (7) is connected to the inlet of the cooler (5) by using the cooler connection oil circuit (8).

3. The electric assembly according to claim 2, wherein the reduction gearbox comprises a counter shaft (21), an output shaft (22), a primary reduction gear set (23), and a secondary reduction gear set (24), the primary reduction gear set (23) comprises a primary reduction driving gear (231) and a primary reduction driven gear (232) that are engaged with each other, the primary reduction driving gear (231) is fastened to a rotating shaft (121) of the motor (1), the primary reduction driven gear (232) is fastened to the counter shaft (21), the secondary reduction gear set (24) comprises a secondary reduction driving gear (241) and a secondary reduction driven gear (242) that are engaged with each other, the secondary reduction driving gear (242) is fastened to the counter shaft (21), and the secondary reduction driven gear (242) is fastened to the output shaft (22); and
two ends of the counter shaft (21) are rotatably supported on the housing of the reduction gearbox (2) by using a first bearing (91) and a second bearing (92) respectively, two ends of the output shaft (22) are rotatably supported on the housing of the reduction gearbox (2) by using a third bearing (93) and a fourth bearing (94) respectively, the first bearing (91) and the third bearing (93) are located on a side of the reduction gearbox (2) that is far away from the motor (1), and the second bearing (92) and the fourth bearing (94) are located on a side of the reduction gearbox (2) that is close to the motor (1).

4. The electric assembly according to claim 3, wherein the cooler front oil circuit (61) comprises a first bearing cooling oil circuit (611) and a third bearing cooling oil circuit (612), an inlet of the first bearing cooling oil circuit (611) and an inlet of the third bearing cooling oil circuit (612) are connected to the oil outlet pipeline (7); and
an outlet of the first bearing cooling oil circuit (611) faces the first bearing (91), so as to allow the cooling oil to be splashed onto the first bearing (91) to cool and lubricate the first bearing (91), and an outlet of the third bearing cooling oil circuit (612) faces the third bearing (93), so as to allow the cooling oil to be splashed onto the third bearing (93) to cool and lubricate the third bearing (93).

5. The electric assembly according to claim 4, wherein the inlet of the first bearing cooling oil circuit (611) is a first oil hole (a1), the inlet of the third bearing cooling oil circuit (612) is a second oil hole (a2), and a difference between hole sizes of the first oil hole (a1) and the second oil hole (a2) is not greater than 20%.

6. The electric assembly according to claim 4, wherein the inlet of the first bearing cooling oil circuit (611) is a first oil hole (a1), the inlet of the third bearing cooling oil circuit (612) is a second oil hole (a2), an inlet of the cooler connection oil circuit (8) is a main oil hole (A), and a hole size of the main oil hole (A) is at least five times greater a hole size of a larger of the first oil hole (a1) and the second oil hole (a2).

7. The electric assembly according to claim 3, wherein the rotating shaft (121) of the motor (1) is rotatably supported on the housing of the motor (1) by using a plurality of motor bearings, the rotating shaft (121) of the motor (1) is a hollow shaft, the rotor cooling oil circuit (622) extends along an inner hole of the hollow shaft, a plurality of bearing oil holes are disposed on the rotating shaft (121) of the motor (1), and each of the bearing oil holes faces a corresponding motor bearing, so as to allow the cooling oil to be splashed onto the motor bearing to cool and lubricate the motor bearing.

8. The electric assembly according to claim 7, wherein the plurality of motor bearings comprise a fifth bearing (95), a sixth bearing (96), a seventh bearing (97), and an eighth bearing (98) that are sequentially arranged close to the reduction gearbox, the primary reduction driving gear (231) is located between the seventh bearing (97) and the eighth bearing (98) in an axial direction, and the stator assembly (11) of the motor (1) is located between the fifth bearing (95) and the sixth bearing (96); and
the plurality of bearing oil holes comprise a fifth oil hole (a5), a sixth oil hole (a6), a seventh oil hole (a7), and an eighth oil hole (a8), the fifth oil hole (a5) faces the fifth bearing (95), so as to allow the cooling oil to be splashed onto the fifth bearing (95) to cool and lubricate the fifth bearing (95), the sixth oil hole (a6) faces the sixth bearing (96), so as to allow the cooling oil to be splashed onto the sixth bearing (96) to cool and lubricate the sixth bearing (96), the seventh oil hole (a7) faces the seventh bearing (97), so as to allow the cooling oil to be splashed onto the seventh bearing (97) to cool and lubricate the seventh bearing (97), and the eighth oil hole (a8) faces the eighth bearing (98), so as to allow the cooling oil to be splashed onto the eighth bearing (98) to cool and lubricate the eighth bearing (98).

9. The electric assembly according to claim 8, wherein a difference between hole sizes of a largest one and a smallest one of the fifth oil hole (a5), the sixth oil hole (a6), the seventh oil hole (a7), and the eighth oil hole (a8) is not greater than 50%.

10. The electric assembly according to claim 8, wherein a ninth oil hole (a9) and a tenth oil hole (a10) are disposed on the rotating shaft (121) of the motor (1), the ninth oil hole (a9) faces one end of a stator winding (112) of the motor (1) to cool the end of the stator winding (112) in an oil slinging manner, and the tenth oil hole (a10) faces the other end of the stator winding (112) of the motor (1) to cool the other end of the stator winding (112) in the oil slinging manner.

11. The electric assembly according to claim 10, wherein a difference between hole sizes of the ninth oil hole (a9) and the tenth oil hole (a10) is not greater than 20%.

12. The electric assembly according to claim 10, wherein a hole size of a larger one of the ninth oil hole (a9) and the tenth oil hole (a10) is greater than or equal to three times a hole size of a largest one of the fifth oil hole (a5), the sixth oil hole (a6), the seventh oil hole (a7), and the eighth oil hole (a8).

13. The electric assembly according to claim 3, wherein the stator cooling oil circuit (623) comprises a stator spraying oil circuit (6231), the stator spraying oil circuit (6231) is arranged on a radial outer side of the stator assembly (11) of the motor (1), a plurality of spraying ports that face the stator assembly (11) of the motor (1) are disposed on the stator spraying oil circuit (6231) in a length direction of the stator spraying oil circuit (6231) to cool the stator assembly (11) of the motor (1).

14. The electric assembly according to claim 13, wherein the stator cooling oil circuit (623) further comprises a reduction gearbox bearing cooling oil circuit (6233) and a reduction gearbox primary gear cooling oil circuit (6234), an inlet of the reduction gearbox bearing cooling oil circuit (6233) and an inlet of the reduction gearbox primary gear cooling oil circuit (6234) are connected between the stator spraying oil circuit (6231) and the main oil circuit (621); and
an outlet of the reduction gearbox primary gear cooling oil circuit (6234) faces an engagement location between the primary reduction driving gear (231) and the primary reduction driven gear (232) to cool and lubricate the primary reduction gear set (23), a fourteenth oil hole (a14) and a fifteenth oil hole (a15) are disposed on the reduction gearbox bearing cooling oil circuit (6234), the fourteenth oil hole (a14) faces the second bearing (92), so as to allow the cooling oil to be splashed onto the second bearing (92) to cool and lubricate the second bearing (92), and the fifteenth oil hole (a15) faces the fourth bearing (94), so as to allow the cooling oil to be splashed onto the fourth bearing (94) to cool and lubricate the fourth bearing (94).

15. The electric assembly according to claim 14, wherein the inlet of the reduction gearbox primary gear cooling oil circuit (6234) is a twelfth oil hole (a12), and the inlet of the reduction gearbox bearing cooling oil circuit is a thirteenth oil hole (a13); and
a difference between hole sizes of the twelfth oil hole (a12) and the thirteenth oil hole (a13) is not greater than 50%.

16. The electric assembly according to claim 14, wherein an inlet of the stator spraying oil circuit (6231) is an eleventh oil hole (a11), the inlet of the reduction gearbox primary gear cooling oil circuit (6234) is a twelfth oil hole (a12), the inlet of the reduction gearbox bearing cooling oil circuit (6233) is a thirteenth oil hole (a13), and a hole size of the eleventh oil hole (a11) is at least five times greater a hole size of a larger of the twelfth oil hole (a12) and the thirteenth oil hole (a13).

17. The electric assembly according to claim 14, wherein the primary reduction gear set (23) and/or the secondary reduction gear set (24) are/is immersed in the cooling oil.

18. The electric assembly according to claim 14, wherein the inlet of the reduction gearbox primary gear cooling oil circuit (6234) is a twelfth oil hole (a12), and the inlet of the reduction gearbox bearing cooling oil circuit (6233) is a thirteenth oil hole (a13); and
the primary reduction gear set (23) is immersed in the cooling oil, and a difference between hole sizes of the twelfth oil hole (a12) and the thirteenth oil hole (a13) is not greater than 50%, or the primary reduction gear set (23) is not immersed in the cooling oil, and a hole size of the twelfth oil hole (a12) is more than twice a hole size of the thirteenth oil hole (a13).

19. The electric assembly according to claim 14, wherein a difference between hole sizes of the fourteenth oil hole (a14) and the fifteenth oil hole (a15) is not greater than 30%.

20. The electric assembly according to claim 14, wherein the stator cooling oil circuit (623) further comprises a reduction gearbox secondary gear cooling oil circuit, and an inlet of the reduction gearbox secondary gear cooling oil circuit is connected between the stator spraying oil circuit (6231) and the main oil circuit (621); and
an outlet of the reduction gearbox secondary gear cooling oil circuit faces an engagement location between the secondary reduction driving gear (241) and the secondary reduction driven gear (242) to cool and lubricate the secondary reduction gear set (24).

21. The electric assembly according to claim 20, wherein the inlet of the reduction gearbox primary gear cooling oil circuit (6234) is a twelfth oil hole (a12), the inlet of the reduction gearbox bearing cooling oil circuit (6233) is a thirteenth oil hole (a13), and the inlet of the reduction gearbox secondary gear cooling oil circuit is a sixteenth oil hole; and
the secondary reduction gear set is not immersed in the cooling oil, and a hole size of the sixteenth oil hole is greater than a hole size of the twelfth oil hole (a12), or the secondary reduction gear set is immersed in the cooling oil, and a hole size of the sixteenth oil hole is less than hole sizes of the twelfth oil hole (a12) and the thirteenth oil hole (a13).

22. The electric assembly according to claim 1, wherein the oil storage apparatus (3) is an oil sump, the oil pumping apparatus (4) comprises a first oil pump (41) and a second oil pump (42) that are connected in parallel, an inlet of the first oil pump (41) and an inlet of the second oil pump (42) are connected to the oil sump by using a pipeline, and an outlet of the first oil pump (41) and an outlet of the second oil pump (42) are connected to the inlet of the cooler (5) by using the oil outlet pipeline (7);
a first one-way valve is disposed at the outlet of the first oil pump (41), so as to allow cooling oil flowing out of the first oil pump (41) to only flow from the first oil pump (41) to the cooler (5) and the cooler front oil circuit (61); and
a second one-way valve is disposed at the outlet of the second oil pump (42), so as to allow cooling oil flowing out of the second oil pump (42) to only flow from the second oil pump (42) to the cooler (5) and the cooler front oil circuit (61).

23. The electric assembly according to any one of claims 1 to 22, wherein there are two motors (1), two reduction gearboxes (2), and two cooling oil circuits (6), one of the cooling oil circuits is configured to cool one of the motors (1) and one of the reduction gearboxes (2), and the other cooling oil circuit (6) is configured to cool the other motor (1) and the other reduction gearbox (2); and
main oil circuits (621) of the two cooling oil circuits (6) are separately disposed or combined.

24. The electric assembly according to claim 23, wherein the two motors (1) are coaxially disposed, and the two reduction gearboxes (2) are disposed side by side between the two motors (1) in a left-right direction of a vehicle; and
the two cooling oil circuits (6) are symmetrically disposed in the left-right direction of the vehicle.

25. A vehicle, comprising a front axle and a rear axle, wherein the electric assembly according to any one of claims 1 to 24 is disposed on at least one of the front axle and the rear axle.
